# EUROPEAN PATENT SPECIFICATION

(11) **EP 0 519 879 B1**
(45) Date of publication and mention of the grant of the patent: **23.08.1995**
(21) Application number: 92830311.4
(22) Date of filing: 16.06.1992
(51) Int. Cl.: B23Q 16/00

(54) **A method of producing a front axle housing for tractors**
Verfahren zum Herstellen eines Vorderachsengehäuses für Traktoren
Procédé pour la fabrication d'un carter avant de l'essieux pour des tracteurs

(30) Priority: 20.06.1991 IT TO910472
(43) Date of publication of application: 23.12.1992
(73) Proprietor: SAME S.p.A., I-24047 Treviglio (Bergamo) (IT)
(72) Inventor: Hampel, Gerald, c/o Same S.p.A., I-24047 Treviglio (Bergamo) (IT)
(74) Representative: Bosotti, Luciano

(56) References cited:
- DD-A- 225 849
- DE-A- 2 852 837
- DE-A- 3 727 312
- DE-B- 2 543 299
- US-A- 3 175 283
- US-A- 4 664 865
- DESIGN ENGINEERING vol. 34, no. 8, 15 April 1963, NEW YORK US page 77 'gagedcastings'
- WERKSTATTSTECHNIK, ZEITSCHRIFT FUR INDUSTRIELLE FERTIGUNG. vol. 69, no. 12, 1December 1979, BERLIN DE pages 803 - 804 K. V. JAN 'Vorrichtungen Teil 2:Lagebestimmen'
- MACHINES AND TOOLING. (STANKI I INSTRUMENTY) vol. 47, no. 3, 1 March 1976,MELTON MOWBRAY GB pages 17 - 18 NEPOMNYASHCHII 'face milling non-rigid parts'

## Description

The present invention relates to a front transmission axle for tractors, including an axle housing for housing the transmission mechanisms (drive and steering) for the front wheels.

In particular, the invention relates to the production of front axle housings by a method providing a final product which, on the one hand, is cheaper and lighter than conventional housings and, on the other hand, has excellent characteristics of mechanical workability, even by automatic machining lines, thus providing a final product of a better quality than conventional products.

The method according to the invention is characterised in that it includes the following steps:
- forming, by casting in nodular cast iron, a unitary, hollow, semi-finished product which has a central tank-shaped portion which is open at the rear and two spyglass-shaped end portions which are open at the sides,
- introducing a first centering and retaining member into the central tank-shaped portion through its rear opening in a direction perpendicular to the length of the semi-finished product,
- introducing two second centering and retaining members into the end portions, longitudinally of the semi-finished product, through the respective side openings,
- clamping the semi-finished product in a fixed position by means of the centering and retaining members,
- forming, by the machining of the semi-finished product thus clamped, at least one exposed, central locating element on the centreline of the semi-finished product and at least two distal locating elements arranged symmetrically on opposite sides of the central locating element near the ends of the semi-finished product,
- checking that the locating elements are formed correctly and removing the first and second centering and retaining members, and
- if the result of the check is positive, transferring the semi-finished product to a machining line so that a series of operations can be effected to complete the front axle housing, the semi-finished product being positioned by means of the locating elements for each operation.

By virtue of this concept, upon completion of the cycle, the method according to the invention produces a front axle housing which, by virtue of the use of nodular cast iron, is considerably lighter and, at the same time, cheaper as a whole than conventional housings which are constituted by elements of steel or non-nodular cast iron and are assembled by welding or mechanical connection systems. Any defects in the general geometry of the unitary semi-finished product output from the casting station are detected as a result of the checking of the correct formation of the locating elements, thus preventing any imperfect semi-finished products from being sent to the machining line. This aspect, together with the use of the locating elements for positioning the semi-finished product correctly in the various stations of the machining line, ensures that the finished housings produced at the end of the cycle (which can be carried out completely automatically) are of an overall quality quite suitable for the subsequent automatic mounting and assembly of the internal mechanical components of the axle.

According to a preferred embodiment of the method, two sets of central and distal locating elements are formed on the clamped semi-finished product, on the front and lower sides and on the front and upper sides of the semi-finished product, respectively. The locating elements may be constituted by flats, holes or flats with holes.

The invention will now be described in detail with reference to the appended drawings, provided purely by way of non-limiting example, in which:
Figure 1 is a partially-sectioned, schematic plan view of a semi-finished product which is intended to form a front axle housing, produced according to the invention,
Figure 2 is a partially-sectioned front elevational view taken on the arrow II of Figure 1, and
Figure 3 is a schematic plan view of the machining line for completing the front axle housing.

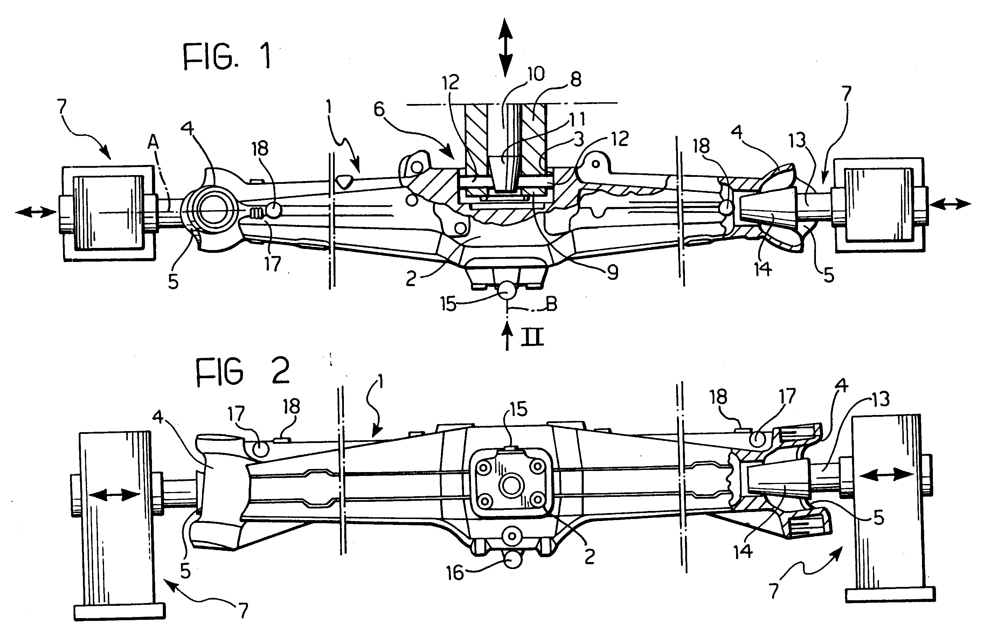

With reference initially to Figures 1 and 2, a semi-finished housing, generally indicated 1, is intended to house the transmission mechanisms (drive shafts, differential, steering kinematic mechanisms) of a front axle for tractors. The housing 1 is generally elongate, with a longitudinal axis A, and symmetrical with respect to a central transverse axis B. In conventional manner, it has a wider, central, substantially tank-shaped portion 2 which is accessible from the exterior through an opening 3 in the rear of the housing 1, and two spyglass-shaped end portions 4 which are accessible from the exterior through respective openings 5 in their sides. The shape of the housing 1 is in any case generally conventional and, for brevity, will not therefore be described in further detail.

Unlike the prior art, according to the invention, the semi-finished housing 1 is constituted by a unitary, hollow body cast in nodular cast iron, normally of the type GS 400-12 UNI 4544, stabilised and dressed.

At the output of the casting station, the unitary housing 1 undergoes a step for the location and formation of locating elements by means of which, on the one hand, a check can be made as to whether or not the housing 1 conforms to the design specifications from a geometrical point of view and, on the other hand, the housing is prepared for subsequent finishing operations.

For this purpose, the housing 1 is positioned in a first checking station, the essential components of which are shown schematically in Figures 1 and 2; the components include a first, central centering and retaining member 6 of the expanding type, and two second, lateral centering and retaining members 7 of the wedge type. The centering and retaining members 6, 7 are carried by a fixed frame (not shown) in which the housing 1 is placed, and are movable relative to the frame, the former along the central transverse axis B of the housing 1 and the latter along its longitudinal axis A.

In particular, the centering and retaining member 6 includes a tubular element 8 which can be moved between a retracted position and an advanced position in which its free end 9 is inserted in the central tank-shaped portion 2 through the rear opening 3 therein. A rod 10, slidable in the tubular element 8, has an end with a conical surface 11 which cooperates with a series of transverse thrust members 12 which are movable radially through the end 9 of the tubular element 8. The tubular element 8 is moved relative to the housing 1 and the internal rod 10 is moved relative to the tubular element 8 by conventional drive systems, for example, pressurised-fluid systems, which are not shown but are within the capabilities of an expert in the art.

Each of the two lateral centering and retaining members 7 includes a movable rod 13, the free end of which carries a wedge-shaped head with a conical surface 14 which is adapted to be inserted in the respective spyglass-shaped end 4 through the opening 5 in its side.

The rod 13 is also moved by conventional drive actuators, for example, pressurised-fluid actuators, which are not shown but are within the capabilities of an expert in the art.

The checking station also includes machining units, which are not shown because they are of conventional type, with flat-forming and/or drilling tools which are arranged to interact with the housing 1 after it has been positioned and clamped in a fixed position by means of the centering and retaining members 6, 7 in the manner described below.

First of all, the end 9 of the tubular element 8 of the centering and retaining member 6 is introduced through the rear opening 3 in the tank-shaped portion 2 to the position shown in Figure 1. The wedge-shaped heads 14 of the two centering and retaining members 7 are then introduced into the respective spyglass-like ends 4 by advancing their rods 13 to the positions shown in Figures 1 and 2. The housing 1 is thus positioned and centered with its longitudinal axis A aligned with the fixed position. At this point, the internal rod 10 is advanced relative to the tubular element 8 so that its end 11 with the conical surface causes the thrust members 12 to be extended radially against the internal walls of the tank-shaped portion 2 to centre and firmly to clamp the central transverse axis B and the housing 1 relative to the fixed position.

At this point, the machining units are activated to form two central locating elements 15, 16 and two pairs of distal locating elements 17, 18 on the outer surface of the housing 1. The locating elements may be constituted by small flats formed by milling or by small holes, or even by flats with holes. In particular, the central locating elements 15, 16 are formed on the centreline of the housing 1, that is, on the central part (the axis B) of the tank-like portion 2 on the front and lower sides of the housing 1 respectively, and the pairs of distal locating elements 17, 18 are formed specularly symmetrically on opposite sides of the central locating elements 15, 16 adjacent the spyglass-shaped ends 4. The locating elements 17 are formed on the front of the housing 1 and the locating elements 18 are used on its upper side.

All the operations described above for centering and retaining the housing 1 and forming the locating elements 15-18 are carried out by an automatic, sequential cycle without manual intervention by the operator, in a manner within the capabilities of an expert in the art. The checking includes checking that the locating elements 15-18 have been formed in the positions predetermined at the design stage; this check may conveniently be effected automatically by sensor members (not shown but also within the capabilities of an expert in the art) associated with the machining units in the station or by optical detection systems, or even by a direct visual check. If the result of the check is positive, that is, if the locating elements 15-18 have been formed correctly in the positions predetermined at the design stage, the housing 1 is passed on to the subsequent finishing processes described below. If it is negative, however, the housing 1 is discarded since it clearly does not conform to the design specifications either from a geometrical or from a dimensional point of view.

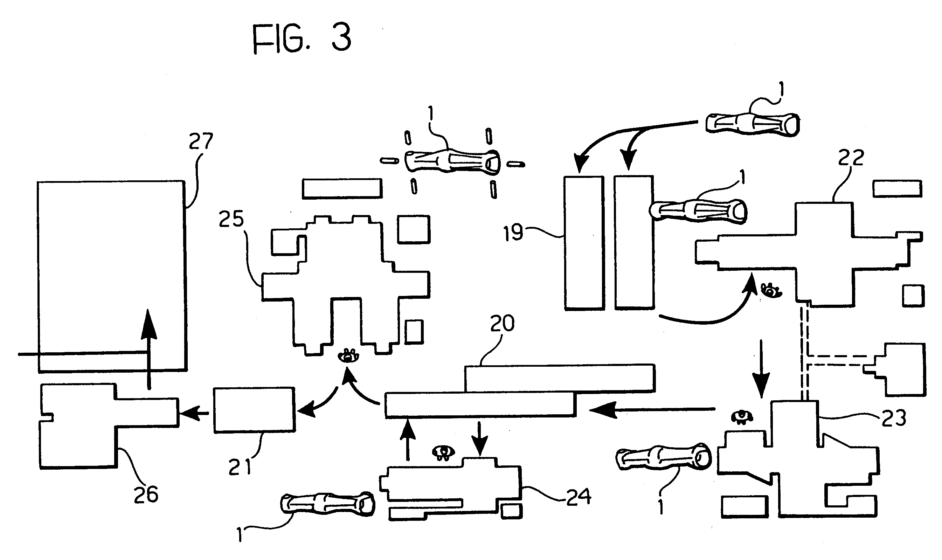

Figure 3 shows schematically the layout of the machining line through which the housing 1 passes in order to undergo a series of finishing operations. In the embodiment illustrated, the line includes motor-driven conveyors, indicated schematically 19, 20 and 21, and successive stations 22, 23, 24 and 25 in which the following steps are carried out:
- station 22: milling/smoothing
- station 23: drilling/tapping
- station 24: inclined drilling
- station 25: finishing reaming, with six units.

At the output of the station 25, the housing 1 is sent to a washing station 26 and then to a final station 27 for any burring and final checking.

In all the stations 22, 23, 24 and 25, the housing 1 is positioned and clamped in order to carry out the respective operations with the use of some or all of the locating elements 15, 16, 17 and 18 formed previously. In fact, the stations have detection systems, not described in detail since they are within the capabilities of an expert in the art, for locating the locating elements and arranging the housing 1 by positioning the locating elements in predetermined positions. The machining line can thus operate completely automatically without the need for human intervention.

Naturally, the details of construction and forms of embodiment may be varied widely with respect to those described and illustrated within the scope of the claims.

## Claims

1. A method of producing a front axle housing for tractors, characterised in that it includes the following steps:
- forming, by casting in nodular cast iron, a unitary, hollow, semi-finished product (1) which has a central tank-shaped portion (2) which is open at the rear (3) and two spyglass-shaped end portions (4) which are open at the sides (5),
- introducing a first centering and retaining member (6) into the central tank-shaped portion (2) through its rear opening (3) in a direction (B) perpendicular to the length (A) of the semi-finished product (1),
- introducing two second centering and retaining members (7) into the end portions and along the longitudinal direction (A) of the semi-finished product (1), through the respective side openings (5),
- clamping the semi-finished product (1) in a fixed position by means of the centering and retaining members (6, 7),
- forming, by the machining of the semi-finished product (1) thus clamped, at least one central locating element (15, 16) on the centreline of the semi-finished product (1) and at least two distal locating elements (17, 18) arranged symmetrically on opposite sides of the or each central locating element (15, 16), near the ends (4) of the semi-finished product (1),
- checking that the locating elements (15, 16, 17, 18) are formed correctly and removing the first and second centering and retaining members (6, 7), and
- if the result of the check is positive, transferring the semi-finished product (1) to a machining line (22, 23, 24, 25) so that a series of operations can be effected to complete the front axle housing (1), the semi-finished product (1) being positioned by means of the locating elements (15, 16, 17, 18) for each operation.

2. A method according to Claim 1, characterised in that two sets of central and distal locating elements are formed in the semi-finished product (1), on the front and lower sides (15, 16) and on the front and upper sides (17, 18) of the semi-finished product (1), respectively.

3. A method according to Claim 1 or Claim 2, characterised in that the locating elements (15, 16, 17, 18) are constituted by flats.

4. A method according to Claim 1 or Claim 2, characterised in that the locating elements (15, 16, 17, 18) are constituted by holes.

5. A method according to Claim 1 or Claim 2, characterised in that the locating elements (15, 16, 17, 18) are constituted by flats with holes.

6. A method according to any one of the preceding claims, characterised in that the first centering and retaining member (6) is of the expanding type.

7. A method according to any one of the preceding claims, characterised in that the second centering and retaining members (7) are of the wedge type.

## Patentansprüche

1. Verfahren zum Herstellen eines Vorderachsengehäuses für Traktoren, **dadurch gekennzeichnet,** daß es die folgenden Schritte enthält:
- Herstellen eines aus einem Stück bestehenden, hohlen Halbfertigerzeugnisses (1), das einen mittleren, behälterförmigen Abschnitt (2), der an der Rückseite (3) offen ist, und zwei fernrohrartige Endabschnitte (4), die an den Seiten (5) offen sind, aufweist, durch Gießen in Kugelgraphitguß,
- Einführen eines ersten Zentrier- und Halteelementes (6) in den mittleren, behälterförmigen Abschnitt (2) durch seine rückwärtige Öffnung (3) in einer Richtung (B) senkrecht zur Länge (A) des Halbfertigerzeugnisses (1),
- Einführen von zwei zweiten Zentrier- und Halteelementen (7) in die Endabschnitte in der Längsrichtung (A) des Halbfertigerzeugnisses (1) durch die entsprechenden Seitenöffnungen (5),
- Befestigen des Halbfertigerzeugnisses (1) in einer stationären Position mittels der Zentrier- und Halteelemente (6,7),
- Herstellen wenigstens eines freiliegenden, mittleren Fixierelementes (15,16) auf der Mittellinie des Halbfertigerzeugnisses (1) und wenigstens zweier äußerer Fixierelemente (17,18), die symmetrisch an einander gegenüberliegenden Seiten des oder jeden mittleren Fixierelementes (15,16) in der Nähe der Enden (4) des Halbfertigerzeugnisses (1) angeordnet sind, durch maschinelle Bearbeitung des so befestigen Halbfertigerzeugnisses (1),
- Überprüfen, ob die Fixierelemente (15,16,17,18) ordnungsgemäß hergestellt sind, und Entfernen des ersten und der zweiten Zentrier- und Halteelemente (6,7), und
- Überführen des Halbfertigerzeugnisses (1) zu einer Fertigungsstraße (22,23,24,25), so daß eine Reihe von Vorgängen ausgeführt werden können, um das Vorderachsengehäuse (1) fertigzustellen, wenn das Resultat der Überprüfung positiv ist, wobei das Halbfertigerzeugnis (1) mittels der Fixierelemente (15,16,17,18) für jeden Vorgang positioniert wird.

2. Verfahren nach Anspruch 1, **dadurch gekennzeichnet**, daß zwei Gruppen mittlerer und äußerer Fixierelemente in dem Halbfertigerzeugnis (1) an der Vorder- und der Unterseite (15,16) bzw. an der Vorder- und der Oberseite (17,18) des Halbfertigerzeugnisses (1) hergestellt werden.

3. Verfahren nach Anspruch 1 oder Anspruch 2, **dadurch gekennzeichnet**, daß die Fixierelemente (15,16,17,18) durch Flachteile gebildet werden.

4. Verfahren nach Anspruch 1 oder Anspruch 2, **dadurch gekennzeichnet**, daß die Fixierelemente (15,16,17,18) durch Löcher gebildet werden.

5. Verfahren nach Anspruch 1 oder Anspruch 2, **dadurch gekennzeichnet**, daß die Fixierelemente (15,16,17,18) durch Flachteile mit Löchern gebildet werden.

6. Verfahren nach einem der vorangehenden Ansprüche, **dadurch gekennzeichnet**, daß das erste Zentrier- und Halteelement (6) vom Dehntyp ist.

7. Verfahren nach einem der vorangehenden Ansprüche, **dadurch gekennzeichnet**, daß die zweiten Zentrier- und Halteelemente (7) vom Keiltyp sind.

## Revendications

1. Procédé de fabrication d'un carter d'essieu avant destiné à des tracteurs, caractérisé en ce qu'il comprend les étapes suivantes consistant à :
- former, par moulage dans de la fonte nodulaire, un produit semi-fini (1) unitaire et creux qui comprend une partie centrale (2) en forme de réservoir qui est ouverte à l'arrière (3) et deux parties (4) d'extrêmité en forme de longue-vue qui sont ouvertes sur les côtés (5),
- introduire un premier élément (6) de centrage et de retenue a l'intérieur de la partie centrale (2) en forme de réservoir à travers son ouverture arrière (3) dans la direction (B) perpendiculaire à la longueur (A) du produit semi-fini (1),
- introduire deux seconds éléments (7) de centrage et de retenue à l'intérieur des parties d'extrêmité et suivant la direction longitudinale (A) du produit semi-fini (1), à travers les ouvertures latérales respectives (5),
- serrer le produit semi-fini (1) en position fixe au moyen des éléments (6, 7) de centrage et de retenue,
- former par usinage du produit semi-fini (1) ainsi serré, au moins un élément (15, 16) de positionnement central sur la ligne médiane du produit semi-fini (1) et au moins deux éléments (17, 18) de positionnement éloigné disposés symétriquement sur les côtés opposés de l'élément ou de chaque élément (15,16) de positionnement central près des extrêmités (4) du produit semi-fini (1),
- vérifier que les éléments (15, 16, 17, 18) de positionnement sont formés correctement et retirer les premier et second éléments (6, 7) de centrage et de retenue, et
- si le résultat de la vérification est positif, transférer le produit semi-fini (1) vers une ligne d'usinage (22, 23, 24, 25) afin de pouvoir effectuer une série d'opérations pour achever le carter (1) d'essieu avant, le produit semi-fini (1) étant positionné au moyen des éléments (15, 16, 17, 18) de positionnement pour chaque opération.

2. Procédé selon la revendication 1, caractérisé en ce que deux jeux d'éléments de positionnement central et éloigné sont formés dans le produit semi-fini (1) sur les côtés avant et inférieur (15,16) et sur les côtés avant et supérieur (17, 18) du produit semi-fini (1), respectivement.

3. Procédé selon la revendication 1 ou la revendication 2, caractérisé en ce que les éléments (15, 16, 17, 18) de positionnement sont constitués par des plats.

4. Procédé selon la revendication 1 ou la revendication 2, caractérisé en ce que les éléments (15, 16, 17, 18) de positionnement sont constitués par des trous.

5. Procédé selon la revendication 1 ou la revendication 2, caractérisé en ce que les éléments (15, 16, 17, 18) de positionnement sont constitués par des plats avec des trous.

6. Procédé selon l'une quelconque des revendications précédentes, caractérisé en ce que le premier élément (6) de centrage et de retenue est du type extensible.

7. Procédé selon l'une quelconque des revendications précédentes, caractérisé en ce que les seconds éléments (7) de centrage et de retenue sont du type a coins.
